(19) Europäisches Patentamt
European Patent Office
Office européen des brevets

(11) Veröffentlichungsnummer: **0 003 966**
**B1**

# (12) EUROPÄISCHE PATENTSCHRIFT

(45) Veröffentlichungstag der Patentschrift: **12.01.83**

(21) Anmeldenummer: **79100323.9**

(22) Anmeldetag: **03.02.79**

(51) Int. Cl.³: **C 09 D 3/66**, C 09 D 3/52, C 09 D 3/81, C 08 L 67/00

## (54) Durch einen Klarlacküberzug abgedeckte Mehrschichtlackierung und Verfahren zu ihrer Herstellung.

(30) Priorität: **16.02.78 DE 2806497**

(43) Veröffentlichungstag der Anmeldung: **19.09.79 Patentblatt 79/19**

(45) Bekanntmachung des Hinweises auf die Patenterteilung: **12.01.83 Patentblatt 83/2**

(84) Benannte Vertragsstaaten: **BE CH DE FR GB IT LU NL SE**

(56) Entgegenhaltungen:
**DE - A - 1 805 189**
**DE - A - 2 013 702**
**DE - A - 2 163 503**

(73) Patentinhaber: **BASF Farben + Fasern Aktiengesellschaft**
**Am Neumarkt 30**
**D-2000 Hamburg 70 (DE)**

(72) Erfinder: **Poth, Ulrich**
**Albachtener Strasse 53**
**D-4400 Münster (DE)**
Erfinder: **Möller, Dieter, Dipl.-Chem**
**Berentrup 5**
**D-4715 Ascheberg (DE)**
Erfinder: **Dobbelstein, Arnold, Dr. Dipl.-Chem.**
**Vorarlbergerweg 5**
**D-5000 Köln 40 (DE)**

(74) Vertreter: **Habbel, Hans-Georg, Dipl.-Ing.**
**Postfach 3429 Am Kanonengraben 11**
**D-4400 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 003 966 B1

# Durch einen Klarlacküberzug abgedeckte Mehrschichtlackierung und Verfahren zu ihrer Herstellung

Die Anmeldung bezieht sich auf eine Mehrschichtlackierung mit einem Klarlacküberzug als Schlußschicht, wobei die von der Schlußschicht abgedeckte äußere Schicht der Mehrschichtlackierung eine Pigmente und/oder Metallpigmente enthaldende Lackschicht ist und die Schlußschicht aus einem Klarlack auf der Basis eines Polyesterharzes, eines Aminoplatharzes und gegebenenfalls eines hydroxylgruppenhaltigen Acrylatharzes hergestellt wurde, sowie auf ein Verfahren zur Herstellung dieser Mehrschichtlackierung. Der Klarlacküberzug soll die gesamte Lackierung gegen mechanische, chemische und witterungsbedingte Belastungen schützen. Darüberhinaus soll er zur Effekt-Verstärkung, z.B. bei Metalleffektlackierungen, beitragen.

Mehrschichtlackierungen, die aus verschiedenen Lackschichten aufgebaut sind, dienen als hochwertige Einbrennlackierungen und werden z.B. in der Kraftfahrzeuglackierung eingesetzt. Der die letzte äußere Schicht der Mehrschichtlackierung bildende Klarlacküberzug wird in der Regel eingebrannt. Er wird aus Klarlacken erhalten, die als Filmbildner Alkydharze aus Phthalsäuren und Polyolen, die mit verschiedenen Fettsäuren oder anderen Monocarbonsäuren modifiziert sind, und Aminoplastharze enthalten.

Alkydharze, die im wesentlichen Phthalsäuren als Veresterungskomponente enthalten und mit gesättigten und/oder ungesättigten Monocarbonsäuren modifiziert sind, sind zusammen mit Aminoplastharzen als Bindemittelkomponente in Überzugsmitteln bekannt, die hochwertige Überzüge liefern. Die Aminoplastharze werden vorzugsweise in Form von Melaminformaldehydharzen und die Überzugsmittel in Form von Lösungen in organischen Lösungsmitteln verwendet. In vielen Fällen enthalten die Überzugsmittel auch Verlaufmittel, Oberflächenmittel, oder Reaktionskatalysatoren.

Andere Klarlacke enthalten neben den Alkydharzen auch Poly(meth)acrylate bzw. deren Copolymerisate. Bisweilen können die Alkydharze auch ganz durch solche Poly(meth)acrylate oder Copolymerisate ersetzt sein. Sie werden erhalten durch Copolymerisation von (Meth)acrylsäureestern von monovalenten Alkoholen mit (Meth)acrylsäureestern, die noch funktionelle Hydroxylgruppen enthalten und die gegebenenfalls auch noch andere Comonomere wie Styrol, Vinyltoluol, Vinylester und auch geringe Anteile an carboxylgruppenhaltigen Monomeren einpolymerisiert enthalten. Diese Acrylatharze werden ebenfalls in Kombination mit Aminoplastharzen in organischen Lösungsmitteln verwendet.

In der DE—B 1 805 189 und DE—B 2 013 702 sind pigmentierte und nichtpigmentierte Überzugsmittel beschrieben, die als Filmbildner ein Gemisch aus Aminoplastharzen und Polyesterharzen enthalten, wobei die Polyesterharz im wesentlichen Veresterungsprodukte aus aliphatischen und cycloaliphatischen Polyolen und Diolen mit aliphatischen und cycloaliphatischen oder aromatischen Dicarbonsäuren sind.

Die Aufgabenstellung ist hier auf die Schaffung von durch Stanzen verformbaren Überzugsmitteln gerichtet. Solche Überzugsmittel werden als hochelastisch bei hoher Härte, hochglänzend und gut pigmentierbar und vergilbungsbeständig mit guter Korrosionsschutzwirkung und Chemikalienbeständigkeit beschrieben. Aus den zahlreichen Beispielen in diesen Patentschriften geht hervor, daß stets aromatische Dicarbonsäuren (Phthalsäure) im Polyestermolekül vorhanden sein müssen, um die für die Verformbarkeit geforderten Eigenschaften zu erreichen. Ein Beispiel, das einen Polyester beschreibt, der ohne Mitveresterung von Phthalsäure hergestellt wurde, ist in der bekannten Literatur nicht zu finden, so daß die einzige grundsätzliche Alternative entweder aromatische oder cycloaliphatische Dicarbonsäuren zu verwenden, nicht vorhanden ist. Die routinemäßige Auswertung der bekannten Patentschriften und ihrer Beispiele führt zu Klarlacken, die als Überzugslack in einer Mehrschichtlackierung, deren abzudeckende letzte Schicht Metallpigmente enthält, also bei einer Metalleffektlackierung, nach Bewitterung und nach UV-Licht-Belastung, wie es in sonnenreichen Gebieten der Fall ist, Risse bilden. Insbesondere stellen sich Haarrisse bei Metallic-Lackierungen von Kraftfahrzeugen ein, die bei der Autolackierung sehr gefürchtet sind. In diesem System treten demnach noch andere unbekannte Wechselwirkungen ein, die z.B. von den Pigmenten und den Metallpigmenten ausgehen können und die noch andere Eigenschaften des Klarlacküberzuges erfordern.

Das Problem der Haarrissbildung ist seit vielen Jahren bekannt, konnte aber mit den in den Patentschriften beschriebenen Lacken nicht gelöst werden.

Aufgabe dieser Erfindung war es, einen Klarlacküberzug für die Mehrschichtlackierung zu schaffen, der nicht mehr zu Rißbildung neigt und bei dem keine Haarisse mehr auftreten.

Die der Erfindung zugrunde liegende Ausgabe wurde gelöst durch eine Mehrschichtlackierung mit einem Klarlacküberzug als Schlußschicht, wobei die von der Schlußschicht abgedeckte äußere Schicht der Mehrschichtlackierung eine Pigmente und/oder Metallpigmente enthaltende Lackschicht ist und die Schlußschicht aus einem Klarlack auf der Basis eines Polyesterharzes, eines Aminoplastharzes und gegebenenfalls eines hydroxylgruppenhaltigen Acrylatharzes hergestellt wurde, die gekennzeichnet ist durch die Verwendung eines hydroxylgruppenhaltigen vernetzbaren Polyesterharzes, das durch veresterung von aliphatischen und/oder cycloaliphatischen Polycarbonsäuren mit aliphatischen und/oder cycloaliphatischen Polyolen erhalten wurde und frei von aromatischen Gruppen innerhalb seiner Netzstruktur ist.

Das hydroxylgruppenhaltige vernetzbare Polyesterharz kann in einer weiteren Ausführungsform durch Mitveresterung von gesättigten und/oder ungesättigten Fettsäuren modifiziert sein.

In einer anderen vorteilhaften Ausführungsform kann das hydroxylgruppenhaltige vernetzbare Polyesterharz auch durch Mitveresterung von aromatischen Monocarbonsäuren als Kettenabbruchmittel modifiziert sein.

In einer vorteilhaften Ausführungsform enthält der Klarlack auf 10 bis 40 Gew.-% Aminoplastharz 60 bis 90 Gew.-% eines Gemisches aus 5 bis 100 Gew.-% hydroxylgruppenhaltiges Polyesterharz und 0 bis 95 Gew.-% hydroxylgruppenhaltiges Acrylatharz, wobei die Summen der Gewichtsprozente 100 ergeben.

Es ist weiterhin Gegenstand der Erfindung, daß die von der Klarlackschicht abgedeckte äußere Schicht der Mehrschichtlackierung Pigmente und/oder Metallpigmente enthält. Es wurde gefunden, daß die genannten Nachteile bei den Belastungen durch Bewitterung nicht entstehen, wenn aromatische Gruppen innerhalb der Netzstruktur des Polyesters nicht vorhanden sind. Obwohl der Gehalt an aromatischen Gruppen die Ergebnisse verschlechtert, können geringe Anteile an aromatischen Polycarbonsäuren mitverwendet werden. Ihr Anteil soll aber 15 Gew.-% der gesamten Polycarbonsäuremenge nicht übersteigen. Aromatische Monocarbonsäuren, wie z.B. Benzoesäure, die bei der Polyveresterung nicht mitvernetzen, sondern zur Seitenkette gehören, beeinflussen die Bewitterungswerte nicht nennenswert.

Gegestand der Erfindung ist ferner das Verfahren zum Herstellen einer Mehrschichtlackierung mit einem Klarlacküberzug als Schlußschicht, wobei die von der Schlußschicht abgedeckte äußere Schicht der Mehrschichtlackierung eine Pigmente und/oder Metallpigmente enthaltende Lackschicht ist, durch Aufbringen eines Klarlackes auf der Basis eines Polyesterharzes, eines Aminoplastharzes und gegebenenfalls eines hydroxylgruppenhaltigen Acrylatharzes auf die die Pigmente und/oder Metallpigmente enthaltende Lackschicht und anschließendes Einbrennen, das dadurch gekennzeichnet ist, daß der Klarlack, der als Polyesterharz ein hydroxylgruppenhaltiges vernetzbares Polyesterharz enthält, das durch Veresterung von aliphatischen und/oder cycloaliphatischen Polycarbonsäuren mit aliphatischen und/oder cycloaliphatischen Polyolen erhalten wurde und innerhalb seiner Netzstruktur frei von aromatischen Gruppen ist, naß-in-naß auf die die Pigmente und/oder Metallpigmente enthaltende Lackschicht aufgebracht und danach die Schichten gemeinsam eingebrannt werden.

Die in den erfindungsgemäß verwendeten Klarlacken enthaltenen Polyesterharze werden in der Regel zusammen mit Aminoplastharzen angewandt. Für einige Anwendungszwecke ist es auch vorteilhaft, noch zusätzlich hydroxylgruppenhaltige Acrylatharze mitzuverwenden, wobei es erforderlich ist, daß auch bei diesen Copolymeren aromatische Gruppen fehlen oder nur in geringen Mengen anwesend sind. So soll der Gehalt an einpolymerisierten aromatische Gruppen tragenden Monomeren 15 Gew.-% nicht übersteigen. In einigen Fällen ist es jedoch möglich und zweckmäßig, die Polyesterharze auch als physikalisch trocknende Bindemittel in dem Klarlack zu verwenden.

Die erfindungsgemäß verwendeten Klarlacke werden in Form von Lösungen oder Dispersionen in organischen Lösungsmitteln verwendet. Sie ermöglichen ein breites Anwendungsgebiet.

Obwohl die Verwendung dieser Klarlacke in Form von Lösungen oder Dispersionen in organischen Lösungsmitteln bevorzugt wird und die in der Regel übliche ist, können die Polyesterharze aber auch bei genügend hoher Säurezahl mit Alkalien, Ammoniak und/oder organischen Aminen oder quarternären Ammoniumbasen neutralisiert und als wasserverdünnbare Überzugsmittel bzw. Klarlacke eingesetzt werden.

Es war überraschend und nicht vorhersehbar, daß die in diesen Klarlacken enthaltenen hydroxylgruppenhaltigen vernetzbaren Polyesterharze, die durch Veresterung von aliphatischen und/oder cycloaliphatischen Polycarbonsäuren mit aliphatischen und/oder cycloaliphatischen Polyolen erhalten wurden, Klarlacke ergeben, die als Schlußschicht einer Mehrschichtlackierung so hervorragend sind, daß sie bei Bewitterung oder nach Belastung durch Sonnenlicht oder UV-Licht in verschiedenen Bewitterungstesten praktisch keinerlei Risse oder kein vorzeitiges Mattwerden des Lackes zeigen. Klarlacke der erfindungsgemäßen Art lassen sich leicht verarbeiten und erfüllen sämtliche übrigen technologischen Eigenschaften, die für Mehrschichtsysteme gefordert werden, vollständig. Entscheidend für die überragend guten Ergebnisse und das völlige Fehlen von Rißbildung ist der Ersatz aromatischer Gruppen durch aliphatische und/oder cycloaliphatische Gruppen im Polyesterharz.

Die in dem erfindungsgemäß verwendeten Klarlack enthaltenen Polyesterharze sind Veresterungsprodukte von Polycarbonsäuren mit Polyolen und enthalten stets noch unveresterte Carboxylgruppen, die dem Harz einen sauren Charakter verleihen, sowie freie Hydroxylgruppen, die für die Vernetzung während des Einbrennens sorgen. Der Säuregrad solcher Harze wird durch die Säurezahl ausgedrückt, deren Höhe von den Veresterungsbedingungen abhängt. Der Gehalt an freien Hydroxylgruppen wird durch die Angabe der Hydroxylahl festgestellt. Sie ist definiert durch die Anzahl von Milligramm KOH, die notwendig ist, um die von 1 g des Harzes bei der Acetylierung verbrauchte Essigsäure zu neutralisieren. Die geeigneten Polyesterharze oder Alkydharze besitzen eine Säurezahl zwischen 0 und 150 und eine Hydroxylzahl zwischen 20 und 300. Zu den einzelnen Aufbaukomponenten ist folgendes zu sagen:

Polycarbonsäuren im Sinne dieser Erfindung sind aliphatische und/oder cycloaliphatische Polycarbonsäuren. Als geeignete aliphatische Polycarbonsäuren seien beispielsweise Bernsteinsäure, Adipinsäure und Sebacinsäure genannt. Geeignete cycloaliphatische Polycarbonsäuren sind insbesondere die cycloaliphatischen Polycarbonsäuren, die der allgemeinen Formel

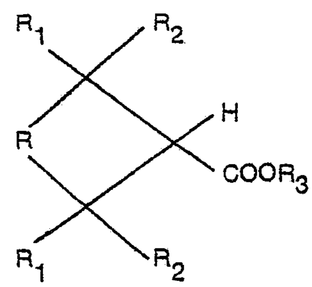

entsprechen, wobei R für einen nicht substituierten oder durch mindestens einen $-COOR_3$-Rest und/oder eine Methylgruppe substituierten Alkylenrest mit 1 bis 4 C-Atomen oder für Reste der allgemeinen Formel

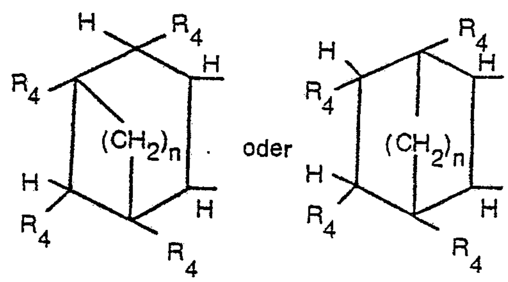

steht und

$R_1 = H$ oder $-COOR_3$ oder $CH_3-$;
$R_2 = H$ oder $CH_3-$;
$R_3 = H$ oder ein Alkylrest mit 1 bis 4 C-Atomen oder ein Hydroxyalkylrest mit 1 bis 4 C-Atomen;
$R_4 = H$ oder $-COOR_3$;
$n = 0$, 1 oder 2
bedeutet.

Zu den Polycarbonsäuren, die unter die allgemeine Formel fallen und die besonders gute Resultate liefern, gehören beispielsweise Cyclohexan-1,2-Dicarbonsäure, Cyclohexan-1,3-Dicarbonsäure, Cyclohexan-1,4-Dicarbonsäure, Tricyclodecan-Dicarbonsäure, Endomethylenhexahydrophthalsäure, Endoäthylenhexahydrophthalsäure, 4-Methylhexahydrophthalsäure, Camphersäure, Cyclohexantetracarbonsäure und Cyclobutantetracarbonsäure.

Nicht nur die Polycarbonsäuren sind für die Veresterung mit den Polyolen verwendbar, sondern auch deren ein- oder mehrwertige Ester mit aliphatischen Alkoholen mit 1 bis 4 Kohlenstoffatomen oder Hydroxyalkoholen mit 1 bis 4 Kohlenstoffatomen. Sofern die Polycarbonsäuren in der Lage sind, Anhydride zu bilden, können auch Anhydride eingesetzt werden.

Die in den erfindungsgemäßen Klarlacken verwendeten Polyesterharze können modifiziert sein durch den Einbau von gesättigten und/oder ungesättigten Monocarbonsäuren, beispielsweise Fettsäuren, die aus natürlichen Ölen und Fetten stammen oder synthetischen Fettsäuren. Es können aber auch aromatische Monocarbonsäuren wie Benzoesäure mitverestert werden. Auf diese Weise läßt sich eine Vielzahl von möglichen Alkydharzen herstellen. Für den erfindungsgemäßen Zweck sollen sie eine Säurezahl zwischen 0 und 150 und eine Hydroxylzahl zwischen 20 und 300 besitzen.

Für die Veresterung der Polycarbonsäuren werden aliphatische und/oder cycloaliphatische Polyole verwendet. Als geeignet werden beispielsweise aufgezählt Trimethyloläthan, Trimethylolpropan, Glyzerin, Pentaerythrit, ferner Äthylenglykol, Propylenglykol, Hexandiol-1,6, Neopentylglykol, Diäthylenglykol, 1,3-Dimethylolcyclohexan, 8- oder 9-Hydroxy-tricyclo(5,2,1,$0^{2,6}$)decan-3,4-epoxid (Polycyclol 1222 der Union Carbide, USA). Daneben ist es vorteilhaft und zweckmäßig, Polyole der allgemeinen Formel

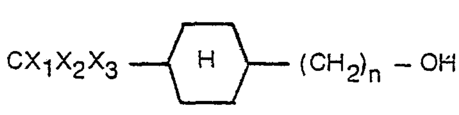

zu verwenden, wobei

$X_1 = X_2 = H$ oder $CH_3-$;

$X_3 =$ OH– oder HO 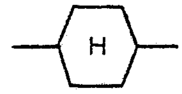 oder HO 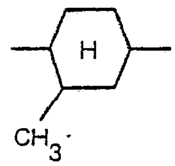

n = O oder 1

ist.

Besonders gute Resultate werden erhalten mit solchen Polyalkoholen aus der allgemeinen Formel, die dem 1,4-Dimethylolcyclohexan und dem 4,4-Dihydroxydicyclohexylpropan zuzuordnen sind.

Die vorstehend aufgeführten Alkydharze oder Polyesterharze können auch noch in der Weise modifiziert sein, daß die aliphatischen und/oder cycloaliphatischen Polycarbonsäuren teilweise durch cycloaliphatische Polyisocyanate, wie z.B. Isophorondiisocyanat, oder aliphatische Polyisocyanate, wie z.B. Hexamethylendiisocyanat ersetzt sind.

Die unter Verwendung von Polyisocyanaten erhaltenen Produkte sind urethangruppenhaltige Polyesterharze bzw. urethangruppenhaltige Alkydharze, die im Sinne dieser Anmeldung unter der Bezeichnung "Polyesterharze" zusammengefaßt sind.

Die Herstellung der Polyesterharze erfolgt nach bekannten Verfahren. Sie sind zusammengefaßt und beschrieben in den Standardwerken

1. Temple C. Patton, Alkyd Resin Technology, Interscience Publishers John Wiley & Sons, New York, London 1962;
2. Dr. Johannes Scheiber, Chemie und Technologie der künstlichen Harze, Wissenschaftliche Verlagsgesellschaft mbH Stuttgart, 1943;
3. Hans Wagner + Hans-Friedrich Sarx, Lackkunstharze, 4. Auflage, Karl Hanser Verlag, München 1959;
4. Ullmanns Encyklopädie der technischen Chemie, Band 14, Seiten 80 bis 106 (1963).

Die Lösungen der Polyesterharze in organischen Lösungsmitteln können als Klarlacke verwendet werden und geben klar durchsichtige Überzüge. Vorteilhaft ist es jedoch und es wird als bevorzugt vorgeschlagen, als Klarlacke solche Lösungen zu verwenden, in denen die Polyesterharze mit einem Aminoplastharz kombiniert sind. Durch die Kombination können viele Oberflächeneigenschaften wie die Härte und die Elastizität des Überzuges je nach Wunsch eingestellt werden.

Als Aminoplastharze können bekannte härtbare Kondensationsprodukte in Betracht gezogen werden, wie sie nach bekannten Verfahren durch Umsetzung von Formaldehyd mit Harnstoff oder Melamin erhältlich sind. Sie sind üblicherweise noch mit 1 bis 6 Kohlenstoffatome aufweisenden Alkanolen ganz oder teilweise veräthert.

Solche Kondensate sind beispielsweise beschrieben in Ullmanns Encyklopädie der technischen Chemie, 3. Bd., Seite 475 bis 496 (1953) und Houben-Weyl, Methoden der organischen Chemie, Bd. 14/2, Seite 319 bis 388 (1963).

In einer anderen vorteilhaften Ausführungsform kann der Klarlack neben dem Polyesterharz und dem gegebenenfalls mitverwendeten Aminoplastharz zusätzlich noch ein hydroxylgruppenhaltiges vernetzbares Acrylatharz enthalten. Hierdurch ergeben sich gute Werte für die Oberflächeneigenschaften der aus solch einem Klarlack hergestellten Überzüge.

Unter hydroxylgruppenhaltigen, vernetzbaren Acrylatharzen werden bekannte härtbare Copolymerisate aus Estern der Acrylsäure und/oder Methacrylsäure mit monovalenten Alkoholen mit solchen Estern der Acrylsäure und/oder Methacrylsäure, die noch funktionelle Hydroxylgruppen besitzen und die gegebenenfalls auch noch andere Comonomere wie Styrol, Vinyltoluol, Vinylester und auch geringe Anteile an carboxylgruppenhaltigen Monomeren einpolymerisiert enthalten, verstanden, wie sie nach bekannten Verfahren erhältlich sind.

Solche Copolymerisate sind beispielsweise beschrieben in J. Scheiber, Chemie und Technologie der künstlichen Harze, Bd. 1, Seite 652 bis 709 (1961).

Die erfindungsgemäß verwendeten Klarlacke können noch zusätzlich übliche Additive in Form von viskositätsregulierenden Stoffen oder Antischaummittel enthalten.

Die erfindungsgemäß verwendeten Klarlacke ergeben Überzüge mit verbesserter Beständigkeit gegen Witterungseinflüsse. Die Schutzwirkung des Klarlackes kann durch Zugabe von UV-Absorbern noch gesteigert werden. Bekannte UV-Absorber sind Derivate aus der Gruppe der Benzotriazole, Oxamide, Benzophenone und Diphenylacrylonitrilsäureester.

Die verarbeitungsfähigen Lösungen sind Klarlacke, die klar durchsichtige Filme ergeben und nach dem Einbrennen bei Temperaturen zwischen 80° und 200°C während einer Zeitdauer von 5 Minuten bis zu 60 Minuten zu harten, elastischen Filmen führen, die eine hohe Korrosionsbeständigkeit gegen

Chemikalien und die Einwirkung von Sonnenstrahlen oder auch UV-Strahlen besitzen. Nach 2 500 Stunden zeigen die Lackierungen in einem Weather-O-meter-Test mit Kohlebogenlampe noch keine Rißbildung, während die bekannten Lacke, deren Polyesterharze reich an aromatischen Bausteinen sind, bereits nach 650 Stunden reißen.

Die Applikation der Klarlacke erfolgt mit den üblichen Methoden des Aufspritzens mittels einer Spritzpistole oder des Gießens, Tauchens oder Walzens. Die Trockenfilmdicken nach dem Härten bzw. Einbrennen liegen in der Regel zwischen 5 und 50 $\mu$m.

Die erfindungsgemäß verwendeten Klarlacke werden bevorzugt eingesetzt für die Schlußschicht einer Mehrschichtlackierung, deren letzte durch den Klarlack abzudeckende Schicht Pigmente und/oder Metallpigmente enthält. Sind Metallpigmente anwesend, so hat die Mehrschichtlackierung das Aussehen einer Metalleffektlackierung.

Um beispielsweise auf einem Kraftfahrzeug eine MetalleffektLackierung herzustellen, wird eine Karosse in der Regel zunächst mit einem Elektrotauchgrund anodisch oder kathodisch beschichtet. Nach dem Einbrennen und gegebenenfalls Schleifen dieser Schicht wird ein Füller aufgebracht, der nach dem Einbrennen das Substrat bzw. den Untergrund für die aufzubringende Metalleffekt-Lackierung darstellt. Auf die Fülleroberfläche wird dann ein das Metallpigment enthaltender Grundlack aufgebracht, der gefärbt sein kann. Es können als Metallpigmente in Form von Pulvern oder Blättchen Aluminium, Messing, Kupfer oder andere Metalle eingesetzt werden. die Färbung in den verschiedenen Farbtönen erfolgt durch Pigmente und/oder lösliche Farbstoffe. Die Bindemittelbasis des Grundlackes kann unterschiederlicher Art sein. Es können alle bekannten Materialien eingesetzt werden, vorausgesetzt, sie haben einen guten Verbund zu der darunter befindlichen Schicht und zur darüber aufgebrachten Klarlackschicht.

Jede Schicht der Mehrschichtlackierung wird einzeln zwischengetrocknet bzw. eingebrannt. Vorteilhaft ist es jedoch, den Klarlack naß-in-naß auf den die Metallpigmente enthaltenden Grundlack zu applizieren ohne Zwischentrocknung dieser Grundschicht. Beide Lackschichten werden dann gemeinsam bei einer Einbrenntemperatur zwischen 80° und 200°C während einer Einbrenndauer zwischen 5 und 30 Minuten eingebrannt.

Eine derartige Mehrschichtlackierung hat eine außergewöhnlich harte, kratzfeste Oberfläche und ist ferner elastisch. Die Oberfläche hat einen hohen Glanzgrad und zeigt eine gleichbleibende Glanzbeständigkeit auch nach längerer Zeit. Die Filme sind beständig gegen Chemikalien. Der durch den erfindungsgemäß verwendeten Klarlack abgedeckte Grundlackfilm ergibt verbesserte Beständigkeit gegen atmosphärische Einflüsse wie Feuchtigkeit, Wärme und UV-Licht. Während ein Zweischicht-Metalleffekt-Aufbau mit einem Klarlacküberzug, der ein alkydharz auf Phthalsäurebasis mit aromatischen Gruppen enthielt; im Weather-O-meter-Test bereits nach 650 Stunden gerissen war, konnte ein erfindungsgemäß hergestellter Zweischicht-Metalleffekt-Aufbau noch nach mehr als 3 600 Stunden als einwandfrei angesehen werden.

Eine sogenannte Uni-Mehrschichtlackierung kann erhalten werden in analoger Arbeitsweise, nur mit dem Unterschied. daß der Grundlack anstelle der Metallpigmente andere in der Lackherstellung übliche Pigmente enthält.

Die nachfolgenden Beispiele sollen die Erfindung erläutern, aber nicht einschränken. Prozentangaben sind Gewichtsprozente, Teile sind Gewichtsteile.

Beispiel 1 (Vergleichsbeispiel)

A.
1,0 Mol Phthalsäureanhydrid,
1,0 Mol Pentaerythrit,
0,6 Mol Kokosnußölfettsäure,
0,6 Mol 2-Äthylhexansäure

werden in einem Rührgefäß, das eine Heizung, Rührer und einen Destillationsaufsatz enthält, eingewogen, 20 g Xylol hinzugefügt und die Mischung innerhalb von 1 Stunde unter Rühren auf 180°C erhitzt. Die Temperatur wird dann innerhalb von 3 Stunden auf 220°C gesteigert und dann für 5 Stunden bei 220°C gehalten. Während der gesamten Reaktionsdauer wird unter Stickstoffatmosphäre gearbeitet. Das während der Reaktion entstandene Reaktionswasser wird so abdestilliert, daß das als Schleppmittel verwendete Xylol stets wieder in das Reaktionsgefäß zurücklaufen kann. Sobald das Reaktionsgemisch eine Säurezahl von 13 und eine Viskosität von 180 mPas (gemessen als 50%ige Lösung in Xylol im ICI-Platte-Kegel-Viskosimeter) erreicht hat, wird das Reaktionsgemisch auf unter 140°C abgekühlt und mit soviel Xylol weiterverdünnt, daß eine Lösung mit einem Festkörpergehalt von 60% entsteht. Die Hydroxylzahl des Harzes beträgt 114.

B. Von dieser 60%igen Harzlösung in Xylol werden 55 g eingewogen und mit 30 g einer 55% Lösung eines handelsüblichen reaktiven mit Butanol teilverätherten Melamin-Formaldehyd-Kondensationsharz in Butanol-Xylol (2:1) versetzt und weitere 15 g eines Lösungsmittelgemisches aus Äthylglykolacetat und Butylglykolacetat (1:1) zugesetzt. Der nach gutem Durchrühren erhaltene Klarlack hat einen Festkörpergehalt von 49% und eine Auslaufzeit von 60 Sekunden aus einem Auslaufbecher mit einer Auslaufdüse von 4 mm Durchmesser nach DIN 53 211.

Beispiel 2

A. Das Beispiel 1A wird wiederholt mit dem Unterschied, daß anstelle der 1,0 Mol Phthalsäureanhydrid 1,0 Mol Hexahydrophthalsäure eingesetzt wird. Bei analoger Arbeitsweise resultiert ein Polyesterharz mit einer Säurezahl von 14 und einer Viskosität von 140 mPas (gemessen als 50%ige Lösung in Xylol mit einem ICI-Platte-Kegel-Viskosimeter), das mit Xylol auf einen Festkörpergehalt von 60% eingestellt wird. Die OH-Zahl des Harzes beträgt 110.

B. Analog dem Beispiel 1B werden 55 g der 60%igen Harzlösung 2A mit 30 g der in 1B beschriebenen Melamin-Formaldehyd-Harzlösung und 15 g eines Lösungsmittelgemisches aus Äthylglykolacetat und Butylglykolacetat (1:1) versetzt. Der nach gutem Durchrühren erhaltene Klarlack hat einen Feststoffgehalt von 49% und eine Auslaufzeit von 61 Sekunden aus einem Auslaufbecher mit einer 4mm-Auslaufdüse nach DIN 53 211.

Beispiel 3

A. Das Beispiel 1A wird wiederholt mit dem Unterschied, daß 1,0 Mol Phthalsäureanhydrid ersetzt wird durch 1,0 Mol Camphersäure. Es resultiert ein Polyesterharz mit einer Säurezahl von 28 und einer Viskosität von 80 mPas (gemessen als 50%ige Lösung in Xylol im ICI-Platte-Kegel-Viskosimeter), das mit Xylol auf einen Festkörpergehalt von 60% eingestellt wird. Die OH-Zahl des Harzes beträgt 120.

B. Mit der Harzlösung aus 3A wird weiter gearbeitet wie in Beispiel 1B angegeben und ein Klarlack mit 49% Festkörper erhalten mit einer Auslaufzeit von 35 Sekunden aus einem Auslaufbecher mit einer 4 mm-Auslaufdüse nach DIN 53 211.

Beispiel 4

18,4 g der nach Beispiel 2A hergestellten 60%igen Polyesterharzlösung werden mit 36,6 g einer 60%Lösung eines handelsüblichen hydroxylgruppenhaltigen hitzehärtbaren Polymethacrylat-Copolymerisat-Harzes mit weniger als 10% einpolymerisiertem Styrol in Xylol und 30 g der 55%igen Lösung des in Beispiel 1B beschriebenen Melamin-Formaldehydharzes versetzt und 15 g eines Lösungsmittelgemisches aus Äthylglykolacetat und Butylglykolacetat (1:1) durch gutes Rühren vermischt. Der erhaltene Klarlack hat einen Feststoffgehalt von 49% und eine Auslaufzeit von 63 Sekunden im Auslaufbecher mit einer 4 mm-Auslaufdüse nach DIN 53 211.

Beispiel 5

A. Es wird ein gesättigter Polyester hergestellt aus

1,0 Mol Hexahydrophthalsäureanhydrid,
0,25 Mol Trimethylolpropan,
0,6 Mol Äthyl-Butyl-Propandiol-1,3,
0,2 Mol 2,2-Methylphenyl-Propandiol-1,3.

Die Genannten Rohstoffe werden in den angegebenen Mengen in ein Reaktionsgefäß mit Füllkörperkolonne, absteigendem Destillationskühler und Rührer eingewogen. Zu dem Reaktionsgemisch werden 10 g einer höher siedenden Aromatenfraktion (Siedeintervall: 150° bis 170°C) gegeben und dann wie in Beispiel 1A verfahren, wobei die Temperatur im Reaktionsgefäß so geführt wird, daß sie am Kopf der Füllkörperkolonne 105°C nicht überschreitet. Es wird unter Stickstoffatmosphäre gearbeitet. Nach 10 Stunden erreicht das Reaktionsgemisch eine Säurezahl von 11 und eine Viskosität von 320 mPas (gemessen als 60%-ige Lösung in Xylol im ICI-Platte-Kegel-Viskosimeter). Der erhaltene gesättigte Polyester wird mit Xylol angelöst zu einer Lösung mit einem Festkörpergehalt von 60%. Die Hydroxylzahl des Harzes beträgt 78.

B. 55 g der nach 5A erhaltenen Harzlösung werden mit 30 g der in Beispiel 1B beschriebenen Melamin-Formaldehyd-Harzlösung versetzt und mit 15 g eines Lösungsmittelgemisches aus Äthylglykolacetat und Butylglykolacetat 1:1 verdünnt und durch Rühren gut gemischt. Der entstandene Klarlack hat einen Festkörpergehalt von 49% und eine Auslaufzeit von 43 Sekunden im Auslaufbecher mit 4mm-Auslaufdüse nach DIN 53 211.

Beispiel 6

Das Beispiel 2 wird wiederholt nur mit dem Unterschied, daß man dem nach 2B erhaltenen Klarlack noch 1,5 Gew.-% 2,2',4,4'-Tetrahydroxybenzophenon als UV-Absorber zusetzt.

Beispiel 7

Die nach den Beispielen 1 bis 6 erhaltenen Klarlacke werden mit einem Lösungsmittelgemisch aus Xylol-Butylacetat im Verhältnis 2:1 auf eine verarbeitungsfähige Konsistenz eingestellt (ca. 20 bis 23 Sekunden im Auslaufbecher mit 4 mm-Düse) und mit einer Spritzpistole auf vorbereitete Metallbleche aufgespritzt. Die Bleche sind mit einer Eisenphosphatierung passiviert, dann mit einer üblichen Elektrotauchlackierung grundiert und eingebrannt, dann mit einem üblichen Einbrennfüller beschichtet und ebenfalls eingebrannt. Diese so vorbereiteten Tafeln werden in zwei gleiche Teile geteilt. Die einen

Tafeln werden mit einem Grundlack auf Basis von Alkyd-Melamin-Harzen, die anderen Tafeln mit einem Grundlack auf Basis von Acrylatharz-Melaminharz beschichtet. Beide Grundlacktypen enthalten ein Aluminiumpigment und transparentes Eisenoxidrotpigment. Anschließend werden beide Grundlacküberzüge naß-in-naß mit den Klarlacken der Beispiele 1 bis 6 überspritzt. Nach einer Ablüftzeit von 15 Minuten wird 30 Minuten bei 130°C in einem Umluftofen eingebrannt. Die Versuche werden so durchgeführt, daß die Klarlackschicht eine Trockenschichtdicke von 35 bis 40 μm und die gesamte Mehrschichtlackierung eine Trockenschichtdicke von ca. 120 μm hat. Die so hergestellten und mit Zweischicht-Metallic-Systemen beschichteten Tafeln werden in einem klimatisierten Raum bei 23°C und einer Luftfeuchtigkeit von 50% 24 Stunden gelagert und dann den folgenden Prüfungen unterzogen:

1. Tiefung nach Erichsen;
2. Pendelhärte (Sekunden);
3. Weather-O-meter mit Kohlenbogenlampe — Dauerlichteinwirkung.
   Wechseleinwirkung: 17 Minuten Trocknen dann
   3 Minuten Beregnung;
   Schwarztafeltemperatur: maximal 65°C;
4. Weather-O-meter-Kantenfilter mit Xenon-Brenner.
   Wechsel: 10 Minuten Trocknen,
   10 Minuten Beregnung
   Schwarztafeltemperatur: maximal 65°C.

Die Prüfungsergebnisse sind in der Tabelle zusammengestellt.

TABELLE

Klarlack nach Beispiel

| | 1 | 2 | 3 | 4 | 5 | 6 |
|---|---|---|---|---|---|---|
| auf Polyestergrundlack | | | | | | |
| Schichtdicke des | | | | | | |
| a. Gesamtaufbaus | ca. 120 µm | 120 µm | 120 µm | 120 µm | 120 µm | 120 µm |
| b. Klarlacküberzuges | 35–40 µm | 35–40 µm | 35–40 µm | 35–40 µm | 35–40 µm | 35–40 µm |
| Weather-O-meter (Kohlenbogenlampe) | | | | | | |
| gerissen nach Stunden | 650 | > 3 500 | 2 500 | 2 800 | > 3 500 | > 3 500 |
| Weather-O-meter (Kantenfilter, Xenon-Brenner) | | | | | | |
| gerissen nach Stunden | 374 | > 1 480 | 900 | 1 000 | > 1 480 | > 1 480 |

TABELLE

Klarlack nach Beispiel

| | 1 | 2 | 3 | 4 | 5 | 6 |
|---|---|---|---|---|---|---|
| auf Polyacrylatgrundlack | | | | | | |
| Schichtdicke des | | | | | | |
| a. Gesamtaufbaus | ca. 120 µm | 120 µm | 120 µm | 120 µm | 120 µm | 120 µm |
| b. Klarlacküberzuges | 35–40 µm | 35–40 µm | 35–40 µm | 35–40 µm | 35–40 µm | 35–40 µm |
| Weather-O-meter (Kohlenbogenlampe) | | | | | | |
| gerissen nach Stunden | 650 | > 3 500 | 2 800 | 2 600 | > 3 500 | > 3 500 |
| Weather-O-meter (Kantenfilter, Xenon-Brenner) | | | | | | |
| gerissen nach stunden | 374 | > 1 027 | 1 000 | 1 100 | > 1 027 | > 1 027 |

Beispiel 8

A. Das Beispiel 1A wird wiederholt mit dem Unterschied, daß 1,0 Mol Phthalsäureanhydrid ersetzt wird durch 1,0 Mol 3,6-Endomethylen- hexahydrophthalsäure. Es wird nach der in Beispiel 1A beschriebenen Arbeitsweise gearbeitet, und es resultiert ein Alkydharz mit einer Säurezahl von 32 und einer Viskosität von 580 mPas (gemessen als 50%ige Lösung in Xylol im ICI-Platte-Kegel-Viskosimeter). Die Hydroxylzahl beträgt 122. Das Harz wird mit Xylol auf einen Festkörpergehalt von 60% verdünnt.

B. Analog dem Beispiel 1B und mit den dort angegebenen Mengen wird ein Klarlack mit einem Feststoffgehalt von 49% hergestellt. Die Auslaufzeit aus einem Auslaufbecher mit 4 mm-Auslaufdüse nach DIN 53 211 beträgt 56 Sekunden.

Beispiel 9

A. Es wird ein Alkydharz hergestellt aus
1,0 Mol Hexahydrophthalsäure,
1,05 Mol Trimethylolpropan,
0,4 Mol Kokosnußölfettsäure,
0,3 Mol Benzoesäure.

Die vorstehend genannten Rohstoffe werden in den angegebenen Mengen in ein Reaktionsgefäß mit Füllkörperkolonne, absteigendem Destillationskühler und Rührer eingewogen. Zu dem Reaktionsgemisch werden 10 g Xylol gegeben und dann wird, wie in Bei-spiel 1A beschrieben, gearbeitet. Es resultiert ein Alkydharz mit einer Säurezahl von 12 und einer Viskosität von 400 mPas (gemessen als 50%ige Lösung in Xylol im ICI-Platte-Kegel-Viskosimeter). Das Alkydharz hat eine OH-Zahl von 78. Das Harz wird mit Xylol zu einer 60%igen Lösung verdünnt und zur Herstellung eines Klarlackes verwendet.

B. Nach der in Beispiel 1B beschriebenen Arbeitsweise und unter Verwendung der Gleichen Mengen wird aus der Harzlösung 9A ein Klarlack hergestellt. Der Feststoffgehalt beträgt 49% und die Auslaufzeit aus einem Auslaufbecher mit 4mm-Auslaufdüse nach DIN 53 211 beträgt 46 Sekunden.

Beispiel 10

A. Es wird ein Alkydharz hergestellt aus
1,0 Mol Hexahydrophthalsäure,
1,0 Mol Pentaerythrit,
0,4 Mol harzsäurearme Tallölfettsäure,
0,8 Mol 2-Äthylhexansäure.

Die genannten Rohstoffe werden in den angegebenen Mengen eingewogen und gemäß der Vorschrift des Beispiels 1A zur Reaktion gebracht. Es wird ein Alkydharz mit einer Säurezahl von 8,5 und einer Viskosität von 290 mPas (gemessen als 50%ige Lösung in Xylol im ICI-Platte-Kegel-Viskosimeter) erhalten. Die Hydroxylzahl des Harzes beträgt 81. Das erhaltene Alkydharz wird mit Xylol angelöst zu einer Lösung mit einem Festkörpergehalt von 60%.

B. Aus der Harzlösung 10A wird nach der Arbeitsweise des Beispiels 1B mit den dort angegebenen Mengen ein Klarlack mit einem Feststoffgehalt von 49% hergestellt. Die Auslaufzeit aus dem Auslaufbecher mit einer 4 mm-Auslaufdüse nach DIN 53 211 beträgt 58 Sekunden.

Beispiel 11

A. Es wird ein gesättigter Polyester hergestellt aus
0,8 Mol Hexahydrophthalsäureanhydrid,
0,2 Mol Adipinsäure,
0,45 Mol Äthylenglykol,
0,45 Mol Neopentylglykol,
0,2 Mol Trimethylolpropan.

Die genannten Rohstoffe werden in den angegebenen Mengen gemäß den Angaben des Beispiels 5A in ein Reaktionsgefäß eingewogen, und es wird nach der Arbeitsweise des Beispiels 5A gearbeitet. Der erhaltene Polyester wird mit einem Lösungsmittelgemisch aus Xylol und Äthylglykolacetat im Verhältnis 3:1 zu einer 60% Festkörper enthaltenden Lösung verdünnt. Der Polyester hat eine Säurezahl von 8,5 und die 60%-ige Lösung eine Viskosität von 680 mPas (gemessen im ICI-Platte-Kegel-Viskosimeter). Die Hydroxylzahl des Polyesters beträgt 106.

B. Von der nach 11A erhaltenen 60%igen Harzlösung werden 55 g eingewogen und mit 30 g einer 55%igen Lösung eines handelsüblichen, reaktiven, mit Methanol teilverätherten Melamin-Formaldehyd-Kondensationsharzes in Butanol-Xylol (2:1) versetzt und weitere 15 g eines Lösungsmittelgemisches aus Äthylglykolacetat und Butylglykolacetat (1:1) zugefügt. Der nach gutem Durchrühren erhaltene Klarlack hat einen Festkörpergehalt von 49% und eine Auslaufzeit von 45 Sekunden aus einem Auslaufbecher mit Auslaufdüse von 4 mm nach DIN 53 211.

Beispiel 12

A. Es wird ein gesättigter Polyester hergestellt aus
0,5 Mol Bersteinsäure,

0,5 Mol Adipinsäure,
0,9 Mol Perhydrobisphenol-A,
0,25 Mol Trimethylolpropan.

Die genannten Rohstoffe werden in den angegebenen Mengen eingewogen, und die Reaktion wird, wie in Beispiel 5A angegeben, durchgeführt. Das erhaltene Harz wird mit einer Lösungsmittelmischung aus Äthylglykolacetat und einer mittelsiedenden Aromatenfraktion (Siedegrenzen zwischen 160° und 175°C) im Verhältnis 1:1 zu einer 60%igen Harzlösung verdünnt. Der entstandene Polyester hat eine Säurezahl von 25 und die 60%-ige Lösung eine Viskosität von 450 mPas (gemessen im ICI-Platte-Kegel-Viskosimeter). Die Hydroxylzahl des Polyesterharzes beträgt 114.

B. Aus dem nach Beispiel 12A erhaltenen Kunstharz wird nach den Angaben des Beispieles 11B mit den dort eingesetzten Mengen ein Klarlack mit einem Festkörpergehalt von 49% und einer Auslaufzeit aus einem Auslaufbecher mit 4mm-Düse nach DIN 53 211 von 67 Sekunden hergestellt.

Beispiel 13

A. Es wird ein gesättigter Polyester aus
0,7 Mol Hexahydrophthalsäure,
0,3 Mol Adipinsäure,
0,2 Mol Trimethylolpropan,
0,4 Mol 1,4-Dimethylolcyclohexan,
0,3 Mol Propylenglykol,
0,2 Mol Äthylenglykol.

Die genannten Rohstoffe werden in den angegebenen Mengen eingewogen, und es wird wie in Beispiel 5A gearbeitet. Es Wird eine 60%ige Harzlösung erhalten.

Das Polyesterharz hat eine Säurezahl von 25 und die 60%ige Lösung eine Viskosität von 430 mPas (gemessen im ICI-Platte-Kegel-Viskosimeter). Die Hydroxylzahl des Polyesterharzes beträgt 105.

B. Aus der Harzlösung, die nach Beispiel 13A erhalten wurde, wird nach den Vorschriften und Angaben des Beispiels 1B eine Klarlacklösung von 49% Festkörper erhalten. Die Auslaufzeit der Lösung beträgt 57 Sekunden im Auslaufbecher mit 4 mm-Auslaufdüse nach DIN 53 211.

Beispiel 14

Genau wie in Beispeil 7 beschrieben, werden die nach den Beispielen 8 bis 13 erhaltenen Klarlacke mit einem Lösungsmittelgemisch aus Xylol-Butylacetat im Verhältnis 2:1 auf eine verarbeitungsfähige Konsistenz eingestellt und auf die in Beispiel 7 beschriebenen Beschichteten und die Grundlacküberzüge enthaltenden Bleche naß-in-naß gespritzt. Nach einer Ablüftzeit von 15 minuten wird in einem Umluftofen 30 Minuten bei 130°C eingebrannt und in einem klimatisierten Raum bei 23°C und einer Luftfeuchtigkeit von 50% 24 Stunden gelagert. Anschließend werden die in Beispiel 7 aufgeführten Prüfungen vorgenommen. Die Tabelle II enthält die Versuchsergebnisse.

TABELLE II

Klarlack nach Beispiel

| | 8 | 9 | 10 | 11 | 12 | 13 |
|---|---|---|---|---|---|---|
| auf Polyestergrundlack | | | | | | |
| Schichtdicke des | | | | | | |
| a. Gesamtaufbaus | ca. 120 µm | 120 µm | 120 µm | 120 µm | 120 µm | 120 µm |
| b. Klarlacküberzuges | 35–40 µm | 35–40 µm | 35–40 µm | 35–40 µm | 35–40 µm | 35–40 µm |
| Weather-O-meter (Kohlenbogenlampe) | | | | | | |
| gerissen nach Stunden | 3 000 | > 3 500 | 2 800 | 2 800 | 2 500 | > 3 500 |
| Weather-O-meter (Kantenfilter, Xenon-Brenner) | | | | | | |
| gerissen nach Stunden | 1 400 | > 1 400 | 1 000 | 1 100 | 900 | > 1 400 |

TABELLE II

Klarlack nach Beispiel

| | 8 | 9 | 10 | 11 | 12 | 13 |
|---|---|---|---|---|---|---|
| auf Polyacrylatgrundlack | | | | | | |
| Schichtdicke des | | | | | | |
| a. Gesamtaufbaus | ca. 120 µm | 120 µm | 120 µm | 120 µm | 120 µm | 120 µm |
| b. Klarlacküberzuges | 35–40 µm | 35–40 µm | 35–40 µm | 35–40 µm | 35–40 µm | 35–40 µm |
| Weather-O-meter (Kohlenbogenlampe) | | | | | | |
| gerissen nach Stunden | 2 800 | 3 400 | 2 500 | 2 600 | 2 000 | 3 500 |
| Weather-O-meter (Kantenfilter, Xenon-Brenner) | | | | | | |
| gerissen nach Stunden | 1 200 | > 1 400 | 900 | 1 000 | 750 | 1 250 |

**Patentansprüche:**

1. Mehrschichtlackierung mit einem Klarlacküberzug als Schlußschicht, wobei die von der Schlußschicht abgedeckte äußere Schicht der Mehrschichtlackierung eine Pigmente und/oder Metallpigmente enthaltende Lackschicht ist und die Schlußschicht aus einem Klarlack auf der Basis eines Polyesterharzes, eines Aminoplastharzes und gegebenfalls eines hydroxylgruppenhaltigen Acrylatharzes hergestellt wurd, gekennzeichnet durch die Verwendung eines hydroxylgruppenhaltigen vernetzbaren Polyesterharzes, das durch Veresterung von aliphatischen und/oder cycloaliphatischen Polycarbonsäuren mit aliphatischen und/oder cycloaliphatischen Polyolen erhalten wurde und frei von aromatischen Gruppen innerhalb seiner Netzstruktur ist.

2. Mehrschichtlackierung nach Anspruch 1, dadurch gekennzeichnet, daß das hydroxylgruppenhaltige vernetzbare Polyesterharz durch Mitveresterung von gersättigten und/odėr ungesättigten Fettsäuren modifiziert ist.

3. Mehrschichtlackierung nach Anspruch 1, dadurch gekennzeichnet, daß das hydroxylgruppenhaltige vernetzbare Polyesterharz durch Mitveresterung von aromatischen Monocarbonsäuren modifiziert ist.

4. Verfahren zum Herstellen einer Mehrschichtlackierung mit einem Klarlacküberzug als Schlußschicht, wobei, die von der Schlußschicht abgedeckte äußere Schicht der Mehrschichtlackierung eine Pigmente und oder Metallpigmente enthaltende Lackschicht ist, durch Aufbringen eines Klarlackes auf der Basis eines Polyesterharzes, eines Aminoplastharzes und gegebenfalls eines hydroxylgruppenhaltigen Acrylatharzes auf die die Pigmente und/oder Metallpigmente enthaltende Lackschicht und anschließendes Einbrennen, dadurch gekennzeichnet, daß der Klarlack, der als Polyesterharz ein hydroxylgruppenhaltiges vernetzbares Polyesterharz enthält, das durch Veresterung von aliphatischen und/oder cycloaliphatischen Polycarbonsäuren mit aliphatischen und/oder cycloaliphatischen Polyolen erhalten wurde und innerhalb seiner Netzstruktur frei von aromatischen Gruppen ist, naß-in-naß auf die die Pigmente und/oder Metallpigmente enthaltende Lackschicht aufgebracht und danach die Schichten Gemeinsam eingebrannt werden.

5. Verfahren nach Anspruch 4, dadurch gekennzeichnet, daß das hydroxylgruppenhaltige vernetzbare Polyesterharz durch Mitveresterung von gesättigten und/oder ungesättigten Fettsäuren modifiziert ist.

6. Verfahren nach Anspruch 4, dadurch gekennzeichnet, daß das hydroxylgruppenhaltige vernetzbare Polyesterharz durch Mitveresterung von aromatischen Monocarbonsäuren modifiziert ist.

**Revendications**

1. Peinture multicouche comprenant un revêtement de laque transparente comme couche finale, dans laquelle la couche extérieure de la peinture multicouche recouverte par la couche finale est une couche de laque contenant des pigments et/ou des pigments métalliques et où la couche finale a été préparée à partir d'une laque transparente à base d'une résine polyester, d'une résine aminoplaste et éventuellement d'une résine acrylate contenant des groupes hydroxyles, caractérisée par l'utilisation d'une résine polyester réticulable contenant des groupes hydroxyles qui a été obtenue par estérification d'acides polycarboxyliques aliphatiques et/au cycloaliphatiques avec des polyols aliphatiques et/ou cycloaliphatiques, et qui est exempte de groupes aromatiques dans sa structure réticulée.

2. Peinture multicouche suivant la revendication 1, caractérisée par le fait que la résine polyester réticulable contenant des groupes hydroxyles est modifiée par coestérification d'acides gras saturés et/ou insaturés.

3. Peinture multicouche suivant la revendication 1, caractérisée par le fait que la résine polyester réticulable contenant des groupes hydroxyles est modifiée par coestérification d'acides monocarboxyliques aromatiques.

4. Procédé pour produire une peinture multicouche munie d'un revêtement de laque transparente comme couche finale, dans laquelle la couche extérieur de la peinture multicouche qui est recouverte par la couche finale est une couche de laque contenant des pigments et/ou des pigments métalliques, par dépôt d'une laque transparente à base d'une résine polyester, d'une résine aminoplaste et éventuellement d'une résine acrylate contenant des groupes hydroxyles, sur la couche de laque contenant les pigments et/ou les pigments métalliques, avec cuisson consécutive, caractérisé par le fait que la laque transparente, qui contient comme résine polyester une résine polyester réticulable contenant des groupes hydroxyles qui a été obtenue par estérification d'acides polycarboxyliques aliphatiques et/ou cycloaliphatiques avec des polyols aliphatiques et/ou cycloaliphatiques et qui est exempte de groupes aromatiques dans sa structure réticulée, est déposée au mouillé-sur-mouillé sur la couche de laque contenant les pigments et/ou les pigments métalliques et, ensuite, les couches sont cuites conjointement.

5. Procédé suivant la revendication 4, caractérisée par le fait que la résine polyester réticulable contenant des groupes hydroxyles est modifiée par coestérification d'acides gras saturés et/ou insaturés.

6. Procédé suivant la revendication 4, caractérisé en ce que la résine polyester réticulable

contenant des groupes hydroxyles est modifiée par coestérification d'acides monocarboxyliques aromatiques.

## Claims

1. Multi-layer lacquer coating covered by a clear lacquer finished as the final coat, the outer layer of this multi-layer laquer coating covered by the final coat being a lacquer coating containing pigments and/or metal pigments and the final coat having been produced by applying a clear lacquer based on a polyester resin, an aminoplast resin and optionally an hydroxyl groups containing acrylic resin characterised by the use of a crosslinkable polyester resin which contains hydroxyl groups obtained by esterifying aliphatic and/or cycloaliphatic acids with aliphatic and/or cycloaliphatic polyols and which polyester being free from aromatic groups within its network structure.

2. Multi-layer lacquer coating according to claim 1, in which the hydroxyl groups containing crosslinkable polyester resin has been modified by coesterification with saturated and/or unsaturated fatty acids.

3. Multi-layer lacquer coating according to claim 1, in which the hydroxyl groups containing crosslinkable polyester resin has been modified by coesterification with aromatic monocarboxylic acids.

4. Process for the production of a multi-layer lacquer coating covered by a clear lacquer finish as the final coat, the outer layer of this multi-layer lacquer coating covered by the final coat being a lacquer coating containing pigments and/or metal pigments, by applying a clear lacquer based on a polyester resin, an aminoplast resin and optionally an hydroxyl groups containing acrylic resin to the lacquer coating containing pigments and/or metal pigments and then stoving characterised by the application of the clear lacquers, containing as polyester resin a hydroxyl groups containing crosslinkable polyester resin, obtained by esterifying aliphatic and/or cycloaliphatic polycarboxylic acids with aliphatic and/or cycloaliphatic polyols and which polyester being free from aromatic groups within its network strukture, wet-on-wet to said lacquer coating containing pigments and/or metal pigments and then stoving the layers together.

5. Process according to claim 4, in which the hydroxyl groups containing crosslinkable polyester resin has been modified by coesterification with saturated and/or unsaturated fatty acids.

6. Process according to claim 4, in which the hydroxyl groups containing crosslinkable polyester resin has been modified by coesterification with aromatic monocarboxylics acids.